# EUROPEAN PATENT APPLICATION

(11) **EP 3 136 329 A1**
(43) Date of publication of application: **01.03.2017**
(21) Application number: 15183059.3
(22) Date of filing: 28.08.2015
(51) Int. Cl.: G06Q 20/38

(54) **SECURING MO/TO PROCESSING**

(71) Applicant: MasterCard International Incorporated, Purchase, NY 10577 (US)
(72) Inventor: SLATTER, Sebastien, London, E14 5NP (GB); COWEN, Michael, London, W2 3DW (GB)
(74) Representative: Gill Jennings & Every LLP

(57) **Abstract**

According to one aspect there is provided a method of securing a Mail Order/Telephone Order (MO/TO) transaction, said method being performed by a MO/TO account holder-facing application running on a processor of an account holder computing device and comprising: receiving a MO/TO token request from an account holder; and responsive thereto, obtaining data corresponding to a token for use in a MO/TO transaction request to be provided to a merchant having access to a merchant-facing application corresponding to said account holder-facing application. According to another aspect there is provided a method of processing a MO/TO transaction, said method being performed by a MO/TO merchant-facing application running on a processor of a merchant computing device and comprising: receiving a MO/TO transaction request, comprising data corresponding to a token, from a merchant; and responsive thereto, initiating obtaining payment credentials using said token. According to further aspects there are provided computer-readable media storing computer-executable instructions that, when performed by a processor, cause said processor to perform the method of either of the preceding aspects.

## Description

The present disclosure relates to methods of securing and processing mail order/telephone order (MO/TO) transactions, computer-readable media for storing instructions which, when executed, cause a processor to implement such methods, and computer systems in which such methods are implemented.

### Background

Card not present (CNP) transactions are payment card transactions made without a payment (e.g. debit or credit) card being physically present at a merchant point of sale (POS). CNP transactions include mail order transactions and telephone order transactions, collectively known as MO/TO transactions.

To make a MO/TO transaction, an account holder must provide a merchant with certain payment credentials, usually details present on their payment card such as the card number, the name of the account holder, the card expiry date and a security code (e.g. card verification value, CVV, or card security code, CSC). Therefore, all that is required for a criminal to make fraudulent MO/TO transactions is access to these details, whether by stealing the physical card, or by gaining sight of it for long enough to make images of it or copy down the details on it.

Due to the ease with which fraudulent MO/TO transactions can be made, the liability for restitution of them is reversed. That is, while for a card present transaction at a POS, the card issuer (i.e. the account holder's bank), must make restitution if the transaction is later found to be fraudulent, for CNP transactions the acquirer (i.e. the merchant's bank) bears responsibility for restitution. Some banks charge higher interchange fees to merchants who routinely handle CNP transactions due to the greater risk involved.

In addition, merchants who take MO/TO transactions must ensure compliance with strict payment card industry data security standards (PCl DSS). Maintaining a PCl compliant call centre for instance is costly and burdensome. A secure room must be provided into which staff are not permitted to take writing materials or mobile telephones. Compliance must also be closely monitored. If calls are recorded then the recording must be paused while payment credentials are communicated. Some merchants even implement advanced telephony systems which pass calls to an automated service at the point where credentials are required to allow customers to enter credentials via their telephone's keypad or by speaking to a speech recognition system rather than providing credentials to a customer service agent.

What is needed are improved methods of securing and processing MO/TO transactions that reduce the burden on merchants.

### Summary

According to a first aspect there is provided a method of processing a Mail Order/Telephone Order (MO/TO) transaction, said method being performed by a MO/TO merchant-facing application running on a processor of a merchant computing device and comprising: receiving a MO/TO transaction request, comprising data corresponding to a token, from a merchant; and responsive thereto, initiating obtaining payment credentials using said data.

The method could further comprise initiating validation of said credentials to authorise and complete said transaction. The method could further comprise, subsequent to said authorisation, receiving a transaction approval. The method could further comprise, responsive thereto, providing said merchant with a transaction confirmation.

Said obtaining could comprise matching the data corresponding to token to data corresponding to the credentials. The data corresponding to the credentials could be stored by said payment application or an entity in communication with it.

Said matching could comprise searching for the data corresponding to the token, or a code derived therefrom, according to a predetermined algorithm, in a look-up table comprising pairs of linked token data and credential data.

Said obtaining could comprise operating on the data corresponding to the token according to a predetermined decoding algorithm to output data corresponding to the credentials.

Said transaction request could further comprise a timestamp. Both the data corresponding to token and said timestamp could be input to said decoding algorithm.

Said obtaining could comprise checking that the token is not present on a list of previously used tokens.

According to a second aspect there is provided a computer-readable medium storing computer-executable instructions that, when performed by a processor, cause said processor to perform the method of the first aspect.

According to a third aspect there is provided a method of securing a Mail Order/Telephone Order (MO/TO) transaction, said method being performed by a MO/TO account holder-facing application running on a processor of an account holder computing device and comprising: receiving a MO/TO token request from an account holder; and responsive thereto, obtaining data corresponding to a token for use in a MO/TO transaction request to be provided to a merchant having access to a merchant-facing application corresponding to said account holder-facing application, said merchant-facing application being configured to initiate obtaining payment credentials using said data corresponding to the token.

The method could further comprise, prior to said obtaining, verifying said account holder's identity.

Said obtaining could comprise operating on data corresponding to a stored account identifier for an account held by said account holder according to a predetermined algorithm.

Said operating could further comprise inputting data corresponding to a current time value to said algorithm.

Said merchant-facing application could be configured to subsequently perform the method of the first aspect.

According to a fourth aspect there is provided a computer-readable medium storing computer-executable instructions that, when performed by a processor, cause said processor to perform the method of the third aspect.

According to a fifth aspect there is provided a computer system comprising a processor and a memory, said memory storing computer-executable instructions that, when performed by said processor, cause said processor to perform the method of either of the first or third aspects.

### Brief Description of the Drawings

Implementations will now be described in detail, by way of example only, with reference to the accompanying drawings, in which:
Figure 1 illustrates an example MO/TO system;
Figure 2 illustrates an example MO/TO transaction process flow;
Figure 3A illustrates a method of processing a MO/TO transaction performed by a MO/TO merchant-facing application;
Figure 3B illustrates a method of securing a MO/TO transaction performed by a MO/TO account holder-facing application; and
Figure 4 illustrates an example computing system which could be used to perform either or both of the methods of Figures 3A and 3B.

### Detailed Description

The following description is presented to enable any person skilled in the art to make and use the system, and is provided in the context of a particular application. Various modifications to the disclosed embodiments will be readily apparent to those skilled in the art.

It is proposed to replace the transfer of payment credentials from an account holder to a merchant in a MO/TO transaction procedure with the transfer of a token. The token is input to a MO/TO merchant-facing application which initiates obtaining payment credentials linked to the token.

According to such a procedure, the payment credentials need never be made available to the customer service agent. The data security restrictions required of the merchant are thus significantly reduced. The liability for restitution of fraudulent payments could even perhaps be shifted on to the issuer as in a card present transaction.

The token used need not be as long as conventional card payment credentials (16 digit card number, 4 digit expiry date, 3 digit CVV or CSC and the account holder's name). The likelihood of the account holder making errors when providing information necessary to complete the transaction, and the time taken to provide the information, can therefore be reduced.

The token could be a single use token generated by a MO/TO account holder-facing application in response to a request made by the account holder each time they wish to make a MO/TO transaction. Such an account-holder facing application could comprise further functionality, for example it could be an electronic wallet application such as MasterPass®, Apple Pay™ or Samsung Pay®.

The account holder-facing application could generate a unique token according to a predetermined algorithm with inputs of one or more of the payment credentials (or other details of the account or account holder, e.g. an account nickname specified by the account holder) and a timestamp, e.g. of the time the account holder-facing application receives a token request. The token could for example be generated by performing a mathematical operation on the payment credentials and the time, to encrypt the payment credentials, and appending or otherwise incorporating the timestamp to act as a decoding key. Alternatively, the algorithm used to encrypt the payment credentials could be time-varying, e.g. changing periodically, and the timestamp could be appended to or otherwise incorporated into the token to inform the merchant-facing application which version of the algorithm to use. In either case, the token could then be further encrypted. The payment credentials would thus be encoded in such a way that only a processor running a corresponding secret decoding algorithm could extract them from the token. In this example, the merchant-facing application would run such a decoding algorithm.

Alternatively, the token need not comprise the payment credentials at all, whether in an encrypted or otherwise modified form. Instead, the merchant-facing application could have read-access to a database/correspondence table in which each set of payment credentials is stored in association with one or more corresponding tokens. Such read-access could be direct access or access provided by an application programming interface (API). Using an API can improve the scalability and security of the system. The merchant-facing application (or the API) could then look up each received token in the table to obtain the corresponding payment credentials and process the transaction request using them. Such a table could be stored on a server in communication with one or both of the merchant-facing and account holder-facing applications. If an API is used, the server and API could be controlled by the same entity.

Such an arrangement could be adapted to incorporate single use tokens if the token stored in the table can be over-written once per transaction request. If the merchant-facing application (or API) has write-access to the table, over-writing or deletion of a token in the table could be performed by the merchant-facing application following matching of a received token to the token in the table. Alternatively or additionally, over-writing could be performed by the account holder-facing application, if it has write-access to the table (or writing if a token has not been generated for an account previously or the previous token has been deleted). This could be done in response to receipt of a request to generate a new token. Deleting/over-writing ensures only one record's worth of memory space is used for each account. However, rather than over-writing or deleting used tokens, it may be preferable in some circumstances to instead include an additional field indicating whether or not the token has been used (to be updated by the merchant-facing application), for example if a record of the token and its use is required to be kept e.g. for legal compliance purposes. Alternatively, a list of used tokens could be maintained to which the merchant-facing application refers on receipt of a token. If the received token is found on the list, the transaction is declined.

Additional security could be provided by the account holder-facing application encrypting the token before sending it to the merchant-facing application, which then decrypts it.

Verification of the account holder's identity could also be completed by means of a log-on process for the account holder-facing application which must be successfully completed in order for a token to be generated.

The account holder-facing application could be a digital wallet application e.g. storing details of various debit and/or credit and/or prepaid and/or currency and/or loyalty accounts. The account holder may be required to select an account from a plurality of accounts stored in the digital wallet either before requesting a token or as part of the token request process.

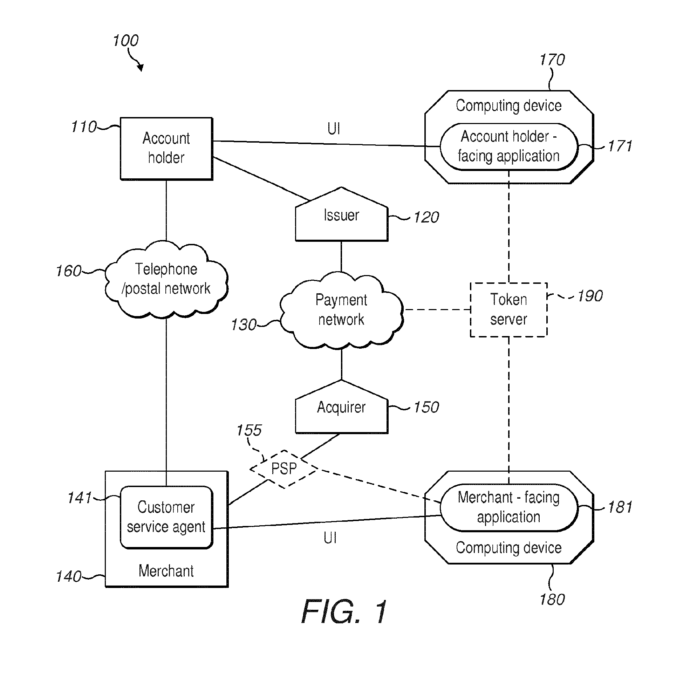

Figure 1 illustrates a system 100 in which the methods described herein can be used. An account holder 110 holds an account with issuer bank 120. Issuer 120 is part of a payment association which uses payment network 130. Merchant 140 has an account with acquirer bank 150. Acquirer 150 is also part of the payment association that uses payment network 130. Merchant 140's relationship with acquirer 150 could optionally be through a payment service provider (PSP) 155. Account holder 110 communicates with a customer service agent 151 of merchant 140 via postal or telephone network 160 to make transactions which are processed via acquirer 150, payment network 130 and issuer 120.

Account holder 110 can communicate with an account holder-facing application 171 through a user interface (UI) of a computing device, such as a smartphone, tablet, laptop or desktop personal computer (PC) 170. Similarly, merchant 140 can communicate with a merchant-facing application 181 through a UI of a computing device 180.

Optionally, a token server 190 may be capable of communicating with one or more of account holder-facing application 171, merchant-facing application 181 and payment network 130. Such communication can for example be via the internet or other wired (e.g. telephone) or wireless (e.g. cellular) network.

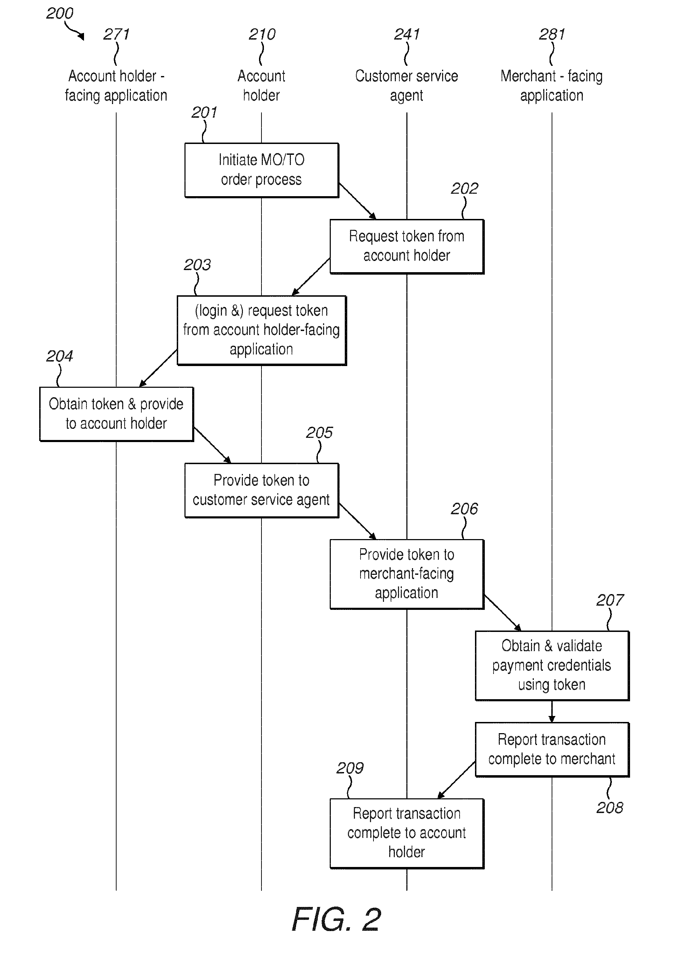

Figure 2 illustrates an example tokenised MO/TO transaction procedure 200. At 201, account holder 210 initiates the order process, e.g. by telephoning a merchant call centre. At 202, merchant customer service agent 241 (e.g. a call centre operative) requests a token from the account holder.

At 203, the account holder requests a token from account holder-facing application 271 through a UI of a user device on which the account holder-facing application is running (e.g. a touchscreen, keypad, mouse or microphone with voice recognition system of a smartphone, tablet, laptop or desktop PC). This step may optionally also comprise the account holder logging into the account holder-facing application to verify their identity.

At 204 the account holder-facing application obtains a token and provides it to the account holder by means of a user interface of the user device (which may be the same as the input user interface e.g. a touchscreen, or different e.g. a speaker). There are several different ways in which the account holder-facing application could obtain the token. As one example, the token could be stored in a memory of the computing device accessible to the account holder-facing application, so that the token can be obtained by retrieving it from that memory. Alternatively, the account holder-facing application could generate the token, e.g. according to a predetermined algorithm. As another alternative, it could request a token from a token server, which could similarly either retrieve the token from memory or generate it on request, then return the token to the account holder-facing application.

At 205 the account holder provides the token to the customer service agent, e.g. by reading it over the telephone or typing it using their telephone keypad. At 206, the customer service agent passes the token to merchant-facing application 281, e.g. by typing it in as the account holder reads it to them.

At 207 the merchant-facing application uses the token to obtain and validate payment credentials, e.g. by searching a look-up table stored on a token server for the token (or having an API do this) and passing payment credentials stored with the token in the table to a payment network as part of a transaction request (again, the API could handle this part). For example, if the system comprises a token server and a PSP, step 207 could proceed as follows. The merchant-facing application could pass the token to the token server for verification. The token server could, in response to verifying the token, deliver payment credentials to the merchant-facing application. (NB: the payment credentials would not be accessible to the customer service agent.) The merchant-facing application could then transmit a transaction request comprising the payment credentials and details of the transaction to the PSP in the same manner a merchant normally would in the absence of the merchant-facing application and tokenisation. The PSP could then forward this to the issuer via the acquirer and payment network as normal. If the issuer approves the transaction then the approval is passed back to the merchant-facing application via the payment network, acquirer and PSP.

At 208, the merchant-facing application reports completion of the transaction to the customer service agent, e.g. through an on-screen message, and at 209 the customer service agent confirms this to the account holder.

If a receipt for the transaction is to be issued, this can be done manually by the customer service agent via post or email. Alternatively, the merchant-facing application could automatically initiate transmission of a receipt. This could be done via email if the account holder's email address has been obtained, or if the merchant-facing and account holder-facing applications can communicate (e.g. via a token server), the merchant-facing application could pass receipt data to the account holder-facing application, which could then present an electronic receipt to the account holder.

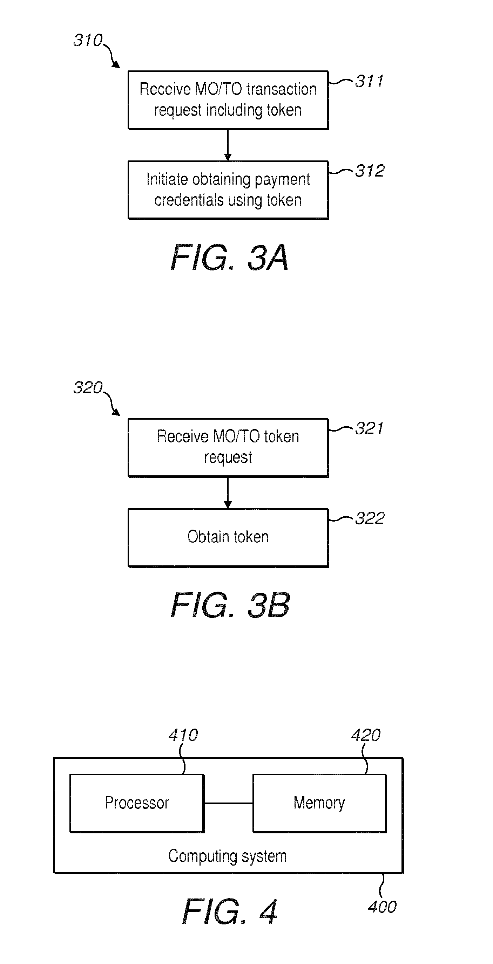

Figure 3A illustrates a method 310 of processing a MO/TO transaction performed by a MO/TO merchant-facing application. At 311 the merchant-facing application receives a MO/TO transaction request, comprising a token, from a merchant. Responsive thereto, at 312, the merchant-facing application initiates obtaining payment credentials using said token.

Figure 3B illustrates a method 320 of securing a MO/TO transaction performed by a MO/TO account holder-facing application. At 321 the account holder-facing application receives a MO/TO token request from an account holder. Responsive thereto, at 322, the account holder-facing application obtains a token for use in a MO/TO transaction request to be provided to a merchant having access to a merchant-facing application corresponding to said account holder-facing application.

Figure 4 illustrates an example computing system 400 which could be used to perform either or both of methods 310 and 320. A processor 410, which could comprise multiple processors, possibly in different locations, in communication with one another, is connected to a memory 420, which could comprise multiple memories, possibly in different locations, in communication with one another. Memory 420 stores computer-executable instructions which, when executed by processor 410, cause it to perform one or both of methods 310 and 320.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a generator readable medium, including, without limitation, non-transitory generator-readable storage, a storage device, and/or a memory device. Such instructions, when executed by a processor (or one or more generators, processors, and/or other devices) cause the processor (the one or more generators, processors, and/or other devices) to perform at least a portion of the methods described herein. A non-transitory generator-readable storage medium includes, but is not limited to, volatile memory, non-volatile memory, magnetic and optical storage devices such as disk drives, magnetic tape, compact discs (CDs), digital versatile discs (DVDs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded generator devices, personal generators, server generators (specific or cloud (virtual) servers), hand-held or laptop devices, multiprocessor systems, microprocessor-based systems, set top boxes, programmable consumer electronics, mobile telephones, network PCs, minigenerators, mainframe generators, distributed generating environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

## Claims

1. A method of processing a Mail Order/Telephone Order (MO/TO) transaction, said method being performed by a MO/TO merchant-facing application running on a processor of a merchant computing device and comprising:
receiving a MO/TO transaction request, comprising data corresponding to a token, from a merchant; and
responsive thereto, initiating obtaining payment credentials using said data.

2. The method of claim 1, further comprising:
initiating validation of said credentials to authorise and complete said transaction;
subsequent to said authorisation, receiving a transaction approval; and
responsive thereto, providing said merchant with a transaction confirmation.

3. The method of either of claims 1 or 2, wherein said obtaining comprises matching the data corresponding to the token to data corresponding to the credentials stored by said payment application or an entity in communication with it.

4. The method of claim 3, wherein said matching comprises searching for the data corresponding to the token, or a code derived therefrom, according to a predetermined algorithm, in a look-up table comprising pairs of linked token data and credential data.

5. The method of either of claims 1 or 2, wherein said obtaining comprises operating on the data corresponding to the token according to a predetermined decoding algorithm to output data corresponding to the credentials.

6. The method of claim 5, wherein said transaction request further comprises a timestamp and both the data corresponding to the token and said timestamp are input to said decoding algorithm.

7. The method of any preceding claim, wherein said obtaining comprises checking that the token is not present on a list of previously used tokens.

8. A computer-readable medium storing computer-executable instructions that, when performed by a processor, cause said processor to perform the method of any preceding claim.

9. A method of securing a Mail Order/Telephone Order (MO/TO) transaction, said method being performed by a MO/TO account holder-facing application running on a processor of an account holder computing device and comprising:
receiving a MO/TO token request from an account holder; and
responsive thereto, obtaining data corresponding to a token for use in a MO/TO transaction request to be provided to a merchant having access to a merchant-facing application corresponding to said account holder-facing application, said merchant-facing application being configured to initiate obtaining payment credentials using said data corresponding to the token.

10. The method of claim 9, further comprising, prior to said obtaining, verifying said account holder's identity.

11. The method of either of claims 9 or 10, wherein said obtaining comprises operating on data corresponding to a stored account identifier for an account held by said account holder according to a predetermined algorithm.

12. The method of claim 11, wherein said operating further comprises inputting data corresponding to a current time value to said algorithm.

13. The method of any of claims 9 to 12, wherein said merchant-facing application is configured to subsequently perform the method of any of claims 1 to 7.

14. A computer-readable medium storing computer-executable instructions that, when performed by a processor, cause said processor to perform the method of any of claims 9 to 12.

15. A computer system comprising a processor and a memory, said memory storing computer-executable instructions that, when performed by said processor, cause said processor to perform the method of any of claims 1 to 7 or 9 to 13.
